# EUROPÄISCHE PATENTSCHRIFT

(11) **EP 1 260 746 B1**
(45) Veröffentlichungstag und Bekanntmachung des Hinweises auf die Patenterteilung: **26.01.2005**
(21) Anmeldenummer: 02291181.2
(22) Anmeldetag: 13.05.2002
(51) Int. Cl.: F16L 3/26, H02G 3/04, B21C 37/06, B29D 23/18, B32B 1/08

(54) **Verfahren zur Herstellung eines biegbaren Rohres und mit dem Verfahren hergestelltes Rohr**
Method for producing a bendable tube, and tube made according to this method
Procédé de fabrication d'un tube pliable et tube réalise selon ce procédé

(30) Priorität: 26.05.2001 DE 20108848 U
(43) Veröffentlichungstag der Anmeldung: 27.11.2002
(73) Patentinhaber: Bayerische Motoren Werke Aktiengesellschaft, 80788 München (DE); Nexans, 75008 Paris (FR)
(72) Erfinder: Gröbmair, Max, 83623 Dietramszell (DE); Baum, Engelbert, 85452 Eichenried (DE); Steinberg, Helmut, Dr.-Ing., 92721 Störnstein (DE)
(74) Vertreter: Döring, Roger, Dipl.-Ing.

(56) Entgegenhaltungen:
- WO-A-99/54654
- DE-A- 19 856 605
- FR-A- 2 179 942
- US-A- 6 096 975
- PATENT ABSTRACTS OF JAPAN vol. 1998, no. 03, 27. Februar 1998 (1998-02-27) & JP 09 298382 A (YAZAKI CORP), 18. November 1997 (1997-11-18)
- PATENT ABSTRACTS OF JAPAN vol. 010, no. 014 (M-447), 21. Januar 1986 (1986-01-21) & JP 60 174628 A (MATSUSHITA DENKO KK), 7. September 1985 (1985-09-07)

## Beschreibung

Die Erfindung bezieht sich auf ein Verfahren zur Herstellung eines biegbaren Rohres zur Aufnahme von Leitungen, die mindestens ein Übertragungselement enthalten, mit welchem aus einem quer zu seiner Längsrichtung gerillten Band längseinlaufend ein gewelltes Rohr geformt wird, dessen in Achsrichtung verlaufende Längskanten nicht miteinander verbunden werden, und das so eingestellt wird, daß es nach einem Auseinanderbiegen der beiden Längskanten zur Bildung einer Öffnung nach Fortfall der Biegekraft automatisch in seine Ruhestellung zurückgeht sowie auf ein mit dem Verfahren hergestelltes Rohr (US-PS 4,970,351).

Ein solches Rohr wird überall dort benötigt, wo eine Mehrzahl von elektrischen und/oder optischen Leitungen auf relativ einfache Art und Weise zu einer Einheit zusammengefaßt werden soll. Ein bevorzugtes Einsatzgebiet des Rohres sind Kabelbäume von Kraftfahrzeugen. Neben dem mechanischen Schutz der im Rohr befindlichen Leitungen hat das Rohr hier den weiteren Vorteil, daß es wegen seiner durch die Wellung bedingten guten Biegbarkeit einfach im Motorraum und in anderen Bereichen eines Kraftfahrzeugs verlegt und befestigt werden kann.

Aus der US-A-6096975 geht ein flexibles, quer zu seiner Längsrichtung gewelltes Rohr mit einem in Längsrichtung verlaufenden Schlitz hervor. Im Bereich des Schlitzes ist eine als Verschlußelement dienende Lasche vorgesehen, die an einer Längskante des Rohres angebracht ist und bei geschlossenem Rohr innen an demselben im Bereich der anderen Längskante anliegt. Das Rohr wird mittels eines Extruders zunächst als Glattrohr erzeugt. Die Wellung wird direkt hinter dem Extruder mit zwei profilierten, im Querschnitt halbkreisförmigen Prägevorrichtungen in das Rohr eingedrückt. Dabei bleibt eine in Längsrichtung durchgehende, an ihrer Unterseite geschlossene Vertiefung frei. Das gewellte Rohr wird abschließend zur Bildung der Lasche an einer Seite der Vertiefung aufgetrennt.

Mit dem Verfahren nach der eingangs erwähnten US-PS 4,970,351 wird ein gewelltes Rohr aus elastischem Kunststoff hergestellt. Es ist von einer der Geräuschdämmung dienenden Schicht aus geschäumtem Material umgeben. Das Rohr und die dasselbe umgebende Schicht haben einen axial durchgehenden Schlitz. Durch Aufweiten des Schlitzes entsteht ein Spalt, durch welchen Leitungen auf einfache Weise in das Rohr eingelegt werden können. Der Spalt schließt sich automatisch, wenn die Aufweitkraft fortfällt. Maßnahmen zum Schutz der Leitungen bzw. der Umgebung vor elektromagnetischen Störungen sind in der Patentschrift nicht erwähnt.

Der Erfindung liegt die Aufgabe zugrunde, das eingangs geschilderte Verfahren so weiterzubilden, daß das erzeugte Rohr nicht nur auf einfache Weise um Kabel und Leitungen herumgelegt werden kann, sondern gleichzeitig einen wirksamen elektrischen Schutz für dieselben darstellt.

Diese Aufgabe wird gemäß der Erfindung dadurch gelöst,
- daß zunächst ein Kunststoffband und ein Metallband längseinlaufend kontinuierlich zu einem Hybridband fest miteinander verbunden werden,
- daß in das Hybridband danach quer zu seiner Längsrichtung und parallel zueinander verlaufende Rillen eingedrückt werden,
- daß das gerillte Hybridband anschließend zu einem Rohr mit außen liegender Metallschicht geformt wird und
- daß das Hybridband während der Formung zum Rohr zur Einstellung einer ausreichenden Rückstellkraft desselben einer Druck- und Wärmebehandlung unterworfen wird.

Dieses Verfahren ist auf einfache Weise mit üblichen Maschinen durchführbar. Es ergibt zunächst ein Hybridband mit einem festen Verbund aus einem Kunststoffband und einem Metallband. In das Hybridband können nach seiner Fertigstellung im gleichen Arbeitsgang quer zu seiner Längsrichtung verlaufende Rillen eingedrückt bzw. eingeprägt werden, welche die Wellung des danach geformten Rohres ergeben. Das gerillte Band kann ebenfalls im gleichen Arbeitsgang in Längsrichtung kontinuierlich zum Rohr gebogen werden. Das geschieht mit vorgegebenem Druck und vorgegebener Temperatur. Dadurch wird dem Rohr eine Rückstellkraft eingeprägt, die so bemessen ist, daß es von sich aus in seine geschlossene Ruhestellung zurückgeht, wenn die Längskanten zum Einlegen von Leitungen auseinandergedrückt wurden und die dabei aufgebrachte Kraft fortfällt. Die im rundum geschlossenen Rohr befindlichen Leitungen sind durch die rundum vorhandene Metallschicht wirksam gegen äußere elektromagnetische Felder geschützt. Die Metallschicht verhindert außerdem, daß von den im Rohr befindlichen Leitungen erzeugte elektromagnetische Felder als Störstrahlung nach außen gelangen.

Das Verfahren nach der Erfindung sowie das mit demselben hergestellte Rohr werden anhand der Zeichnungen in Ausführungsbeispielen erläutert.

Es zeigen:
Fig. 1 schematisch eine Anordnung zur Herstellung eines Hybridbandes.
Fig. 2 einen Schnitt durch Fig. 1 längs der Linie II - II in vergrößerter Darstellung.
Fig. 3 Draufsichten auf das Hybridband in zwei unterschiedlichen Ausführungsformen.
Fig. 4 eine Seitenansicht des Hybridbandes nach Fig. 3.
Fig. 5 und 6 Querschnitte von zwei unterschiedlichen, mit dem Verfahren nach der Erfindung hergestellten Rohren.
Fig. 7 eine Seitenansicht eines Rohres mit darin befindlichen Leitungen.

Von einer Spule 1 wird ein Kunststoffband 2 abgezogen und gemeinsam mit einem von einer Spule 3 abgezogenen Metallband 4 einer Einrichtung 5 zugeführt, in welcher die beiden Bänder 2 und 4 fest miteinander verbunden werden. Dazu ist mindestens eines der Bänder 2 oder 4 mit einer klebfähigen Schicht versehen, die in der Einrichtung 5 aktiviert wird. Für die feste Verbindung der beiden Bänder 2 und 4, die in bevorzugter Ausführungsform die gleiche Breite haben, können in der Einrichtung 5 eine erhöhte Temperatur von beispielsweise 200 °C bis 250 °C und Druck angewendet werden. Die Einrichtung 5 verläßt ein Hybridband 6, das auf der einen Seite eine Metallschicht 7 und auf der anderen Seite eine fest mit derselben verbundene Kunststoffschicht 8 hat (Fig. 2). Das Metallband 7 besteht beispielsweise aus Kupfer oder Aluminium. Es kann auch eine Legierung dieser Materialien verwendet werden. Ein solches Band ist beispielsweise 20 µm dick. Für das Kunststoffband 8 sind beispielsweise Polypropylen und Polyamid geeignet. Ein solches Band ist beispielsweise 200 µm dick. Zur Herstellung des Hybridbandes 6 wird in bevorzugter Ausführungsform ein mit Kleber beschichtetes Kunststoffband 8 verwendet.

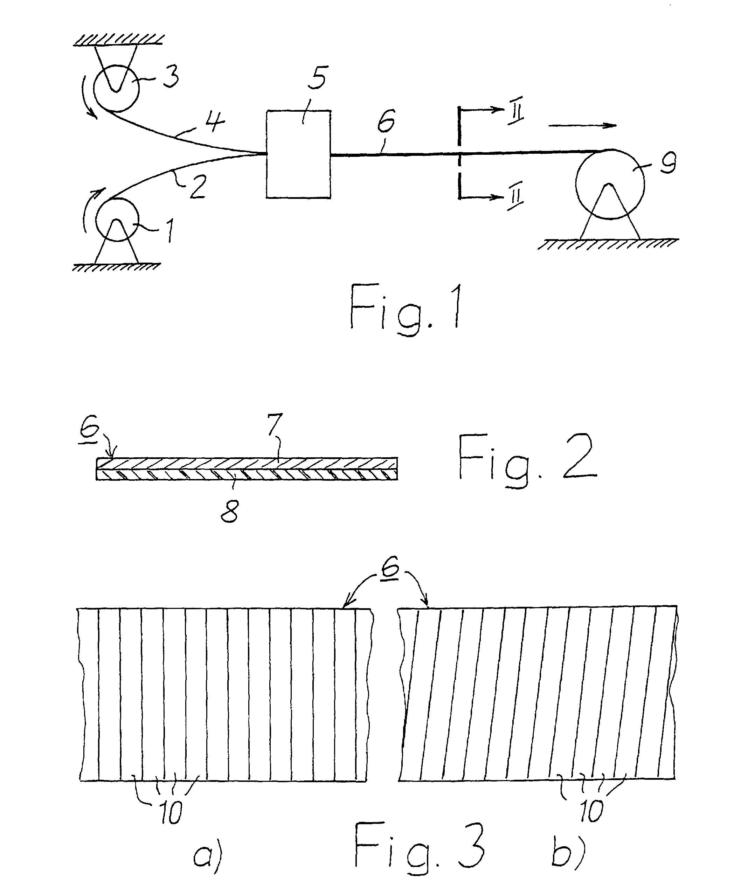

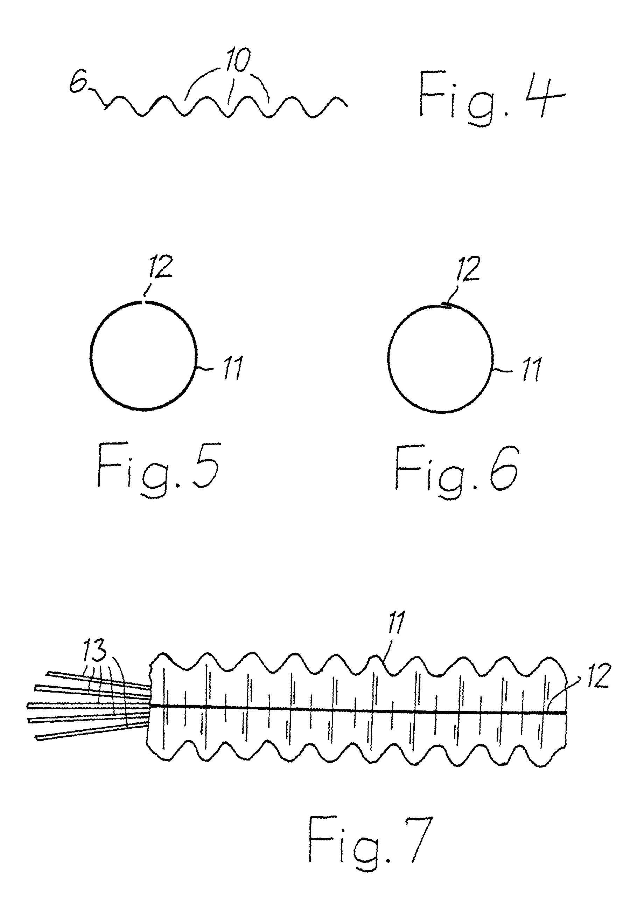

Das Hybridband 6 kann auf eine Spule 9 aufgewickelt werden. Es kann jedoch im gleichen Arbeitsgang oder auch in einem getrennten Arbeitsgang mit parallel zu einander verlaufenden Rillen 10 versehen werden, die quer zu seiner Längsrichtung in dasselbe eingedrückt bzw. eingeprägt werden. Bei diesem Vorgang wird das Hybridband 6 vorzugsweise erwärmt und mit Druck beaufschlagt. Es wird nach dem Einprägen der Rillen 10 gezielt abgekühlt. Die Rillen 10 können gemäß Fig. 3a rechtwinklig oder gemäß Fig. 3b schräg zur Längsrichtung des Hybridbandes 6 verlaufen. In beiden Fällen ergibt sich für das Hybridband 6 eine Wellenform, wie sie in einer Seitenansicht desselben in Fig. 4 schematisch dargestellt ist.

Das mit den Rillen 10 versehene Hybridband 6 wird anschließend längseinlaufend so zu einem Rohr 11 geformt, daß es zwar rundum geschlossen ist, aber an einer in Längsrichtung verlaufenden Naht 12 offen bleibt. Bei der Formung zum Rohr 11 wird das Hybridband 6 gezielt erwärmt, beispielsweise auf 200 °C bis 250 °C, und einem vorgegebenen Druck ausgesetzt. Dem Rohr 11 wird dadurch eine Rückstellkraft eingeprägt, durch welche es nach einer Verformung wieder in seine rohrförmige Ruhestellung zurückgeht, wenn die für die Verformung aufgewendete Kraft fortfällt. Das Rohr 11 kann ebenfalls noch im gleichen Arbeitsgang mit der Herstellung des Hybridbandes 6 geformt werden, aber auch in einem getrennten Arbeitsgang. Die Metallschicht 7 liegt beim fertigen Rohr 11 außen.

Die Längskanten des Hybridbandes 6 können im fertigen Rohr 11 gemäß Fig. 5 stumpf aneinander stoßen. Sie können einander gemäß Fig. 6 aber auch überlappen. In beiden Fällen kann das Rohr 11 an der offenen Naht 12 auseinander gebogen werden, so daß in Fig. 7 mit eingezeichnete Leitungen 13 in dasselbe eingelegt werden können. Nach Fortfall der für das Auseinanderbiegen aufgewendeten Kraft schließt sich das Rohr 11 wegen seiner eingeprägten Rückstellkraft automatisch. Die Leitungen 13 sind dann mechanisch und durch die Metallschicht 7 auch elektrisch geschützt.

Das Rohr 11 ist wegen der in das Hybridband 6 eingeprägten Rillen 10 gewellt und damit gut biegbar. Bei einem Hybridband 6 mit Rillen 10, die gemäß Fig. 3a rechtwinklig zu seiner Längsrichtung verlaufen, ergibt sich ein Rohr 11 mit Ringwellung (Fig. 7), während ein schräger Verlauf der Rillen 10 gemäß Fig. 3b zu einem Rohr 11 mit schraubenlinienförmiger Wellung führt.

## Patentansprüche

1. Verfahren zur Herstellung eines biegbaren Rohres zur Aufnahme von Leitungen, die mindestens ein Übertragungselement enthalten, mit welchem aus einem quer zu seiner Längsrichtung gerillten Band längseinlaufend ein gewelltes Rohr geformt wird, dessen in Achsrichtung verlaufende Längskanten nicht miteinander verbunden werden, und das so eingestellt wird, daß es nach einem Auseinanderbiegen der beiden Längskanten zur Bildung einer Öffnung nach Fortfall der Biegekraft automatisch in seine Ruhestellung zurückgeht, **dadurch gekennzeichnet,**
- **daß** zunächst ein Kunststoffband (2) und ein Metallband (4) längseinlaufend kontinuierlich zu einem Hybridband (6) fest miteinander verbunden werden,
- **daß** in das Hybridband (6) danach quer zu seiner Längsrichtung verlaufende Rillen (10) eingedrückt werden,
- **daß** das gerillte Hybridband (6) anschließend zu einem Rohr (11) mit außen liegender Metallschicht (7) geformt wird und
- **daß** das Hybridband (6) während der Formung zum Rohr (11) zur Einstellung einer ausreichenden Rückstellkraft desselben einer Druck- und Wärmebehandlung unterworfen wird.

## Claims

1. Method of manufacturing a flexible tube to receive lines that contain at least one transmission element, with which a corrugated tube is formed from a corrugated ribbon in longitudinal direction such that the longitudinally extending edges of the tube are not connected to each other, and which is conditioned in such a manner that the longitudinally extending edges after spreading of the same to receive an opening automatically return to their initial position when the bending force is no longer applied, **characterized in that**
- at first a plastic ribbon (2) and a metal ribbon (4) are continuously firmly bonded to each other in their longitudinal direction to form a hybrid ribbon (6),
- parallel grooves (10) are then pressed into the hybrid ribbon (6) perpendicular to its longitudinal direction,
- the corrugated hybrid ribbon (6) afterwords is formed into a tube (11) with the metal layer (7) on the outside, and
- the hybrid ribbon (6) is compressed and heated during the forming of the tube (6) to adjust a sufficient resiliency.

## Revendications

1. Procédé de fabrication d'un tuyau flexible destiné à recevoir des câbles qui comportent au moins un élément de transmission, un tuyau ondulé étant formé longitudinalement avec ledit procédé à partir d'une bande rainurée perpendiculairement à son sens longitudinal, dont les arêtes longitudinales évoluant dans le sens axial ne sont pas reliées ensemble, et qui est mis au point de telle manière qu'après un écartement des deux arêtes longitudinales en vue de former une ouverture, il retourne automatiquement dans sa position de repos après suppression de la force imprimée, caractérisé
- en ce qu'en premier lieu, une bande de plastique (2) et une bande de métal (4) sont assemblées ensemble longitudinalement de manière fixe et en continu pour former une bande hybride (6),
- en ce que des rainures (10) évoluant perpendiculairement à son sens longitudinal sont alors imprimées dans la bande hybride (6),
- en ce que la bande hybride (6) rainurée est ensuite formée en un tuyau (11) avec la couche de métal (7) se trouvant à l'extérieur et
- en ce que la bande hybride (6) est soumise à un traitement pressurisé et thermique au cours de la formation en tuyau (11) en vue de la création d'une force de retour suffisante de ce dernier.
